# EUROPÄISCHE PATENTANMELDUNG

(11) **EP 3 904 025 A1**
(43) Veröffentlichungstag der Anmeldung: **03.11.2021**
(21) Anmeldenummer: 20172126.3
(22) Anmeldetag: 29.04.2020
(51) Int. Cl.: B27B 5/06

(54) **VERFAHREN ZUM ZERSÄGEN ZUMINDEST EINER PLATTE**

(71) Anmelder: IMA Schelling Austria GmbH, 6858 Schwarzach (AT)
(72) Erfinder: Pöschl, Wolfgang, 6844 Altach (AT)
(74) Vertreter: Fechner, Thomas

(57) **Zusammenfassung**

Verfahren zum Zersägen zumindest einer Platte (1) oder zumindest eines Plattenstapels (2) entlang von Schnittlinien (3) zumindest eines Schnittplans (4) mittels zumindest einer, entlang einer Sägelinie (5) verfahrbaren Säge (6) einer Plattenaufteilanlage (7), wobei die Schnittlinien (3) im, gegebenenfalls jeweiligen, Schnittplan (4) zum Teil zueinander parallel und zum Teil zueinander abgewinkelt, insbesondere orthogonal, angeordnet sind und das Zersägen der Platte (1) oder des Plattenstapels (2) in aufeinander folgenden Sägeverfahrensabschnitten durchgeführt wird, wobei in einem jeden der Sägeverfahrensabschnitte nur ein Sägevorgang entlang von einer einzelnen Schnittlinie (3) des, gegebenenfalls jeweiligen, Schnittplans (4) oder nur Sägevorgänge entlang von zueinander parallelen Schnittlinien (3) des, gegebenenfalls jeweiligen, Schnittplans (4) durchgeführt werden, wobei zwischen zumindest zwei der aufeinanderfolgenden Sägeverfahrensabschnitte ein Plattenaufstapeln und/oder ein Plattenabstapeln durchgeführt wird und die Sägevorgänge zumindest dieser zwei aufeinanderfolgenden Sägeverfahrensabschnitte mit einer voneinander verschiedenen Anzahl von aufeinandergestapelten Platten (1) durchgeführt werden. (Fig. 15)

## Beschreibung

Die vorliegende Erfindung betrifft ein Verfahren zum Zersägen zumindest einer Platte oder zumindest eines Plattenstapels entlang von Schnittlinien zumindest eines Schnittplans mittels zumindest einer, entlang einer Sägelinie verfahrbaren Säge einer Plattenaufteilanlage, wobei die Schnittlinien im, gegebenenfalls jeweiligen, Schnittplan zum Teil zueinander parallel und zum Teil zueinander abgewinkelt, insbesondere orthogonal, angeordnet sind und das Zersägen der Platte oder des Plattenstapels in aufeinander folgenden Sägeverfahrensabschnitten durchgeführt wird, wobei in einem jeden der Sägeverfahrensabschnitte nur ein Sägevorgang entlang von einer einzelnen Schnittlinie des, gegebenenfalls jeweiligen, Schnittplans oder nur Sägevorgänge entlang von zueinander parallelen Schnittlinien des, gegebenenfalls jeweiligen, Schnittplans durchgeführt werden.

Die Aufteilung von Platten oder Plattenstapeln mittels einer Plattenaufteilanlage unter Anwendung von gattungsgemäßen Verfahren ist ein streng sequenzieller Prozess. Bei der Durchführung der Verfahren werden Rohplatten, einzeln oder in einem Plattenstapel aufgestapelt, in aufeinanderfolgenden Sägeverfahrensabschnitten über verschiedene Zwischenformate in die Endformate zersägt. In den einzelnen Sägeverfahrensabschnitten werden dabei jeweils nur einzelne Sägevorgänge oder mehrere Sägevorgänge an zueinander parallelen Schnittlinien durchgeführt. Beim Stand der Technik können die Platten in Form von Plattenstapeln zersägt werden, wenn alle Platten des Plattenstapels entlang derselben Schnittlinien, also einem gemeinsamen Schnittplan folgend, aufgeteilt werden können. Ist dies nicht der Fall, so muss bei gattungsgemäßen Verfahren jede Platte einzeln über die entsprechenden Zwischenformate in die Endformate aufgeteilt werden.

In der EP 2 422 944 B1 ist ein solches Verfahren geschildert, wobei diese Schrift vorsieht, dass ein Rücktransport einzelner Platten nach der Durchführung der Sägeverfahrensabschnitte erfolgt, um anschließend den nächsten Sägeverfahrensabschnitt durchzuführen. In dieser Schrift werden die Sägevorgänge im ersten Sägeverfahrensabschnitt als Erstschnitte, die Sägevorgänge im zweiten Sägeverfahrensabschnitt als Zweitschnitte und die Sägevorgänge in einem gegebenenfalls durchzuführenden dritten Sägeverfahrensabschnitt als Drittschnitte bezeichnet. Diese Bezeichnungsweise ist durchaus üblich und findet sich z.B. auch in der EP 2 193 894 B1, welche eine spezielle Lösung zur Durchführung der Drittschnitte mittels sogenannter Einsatzschnitte vorschlägt.

Bei gattungsgemäßen Verfahren können die Platten nur dann in einem Plattenstapel zersägt werden, wenn alle Platten des Plattenstapels einen identischen Schnittplan folgend zersägt werden müssen. Ist dies nicht der Fall, so muss beim Stand der Technik jede Platte einzeln ihrem jeweiligen Schnittplan folgend zersägt werden. Dies schlägt sich nachteilig in der zum Aufteilen der Platten benötigten Zeit nieder.

Aufgabe der Erfindung ist es, bei Verfahren der eingangs genannten Art eine Möglichkeit vorzuschlagen, wie die zum Aufteilen der Platten insgesamt benötigte Zeit reduziert werden kann.

Zur Lösung dieser Aufgabe wird erfindungsgemäß ein Verfahren gemäß Patentanspruch 1 vorgeschlagen.

Dieses ist somit dadurch gekennzeichnet, dass zwischen zumindest zwei der aufeinanderfolgenden Sägeverfahrensabschnitte ein Plattenaufstapeln und/oder ein Plattenabstapeln durchgeführt wird und die Sägevorgänge zumindest dieser zwei aufeinanderfolgenden Sägeverfahrensabschnitte mit einer voneinander verschiedenen Anzahl von aufeinandergestapelten Platten durchgeführt werden.

Ein der Erfindung zugrundeliegender Grundgedanke liegt darin, dass bei erfindungsgemäßen Verfahren die Platten immer dann gemeinsam in Form eines Plattenstapels im jeweils darauffolgenden Sägeverfahrensabschnitt gemeinsam zersägt werden können, wenn dies die Lage der Schnittlinien im nächsten Sägeverfahrensabschnitt zulässt. Ist die Lage der Schnittlinien hingegen so unterschiedlich, dass ein gemeinsames Zersägen in einem Plattenstapel im nächsten Sägeverfahrensabschnitt nicht möglich ist, so müssen dann die Sägevorgänge dieses Sägeverfahrensabschnitts eben an einem Plattenstapel mit weniger Platten oder an einzelnen Platten durchgeführt werden. Durch die Erfindung können also immer dann die Sägevorgänge eines Sägeverfahrensabschnittes effektiv an einem Plattenstapel durchgeführt werden, wenn dies die Lage der Schnittlinien zulässt. Hierdurch kann die insgesamt nötige Anzahl der Sägevorgänge optimiert und reduziert werden.

Zur Umsetzung erfindungsgemäßer Verfahren gibt es zahlreiche Möglichkeiten. Es kann bei der Durchführung des Verfahrens zwischen verschiedenen Sägeverfahrensabschnitten sowohl zum Plattenaufstapeln als auch zum Plattenabstapeln kommen. Z.B. kann das Verfahren mit einer einzigen Platte starten, wobei dann nach der Durchführung des ersten Sägeverfahrensabschnittes die dann erzeugten Platten zu einem Plattenstapel aufeinandergestapelt werden, um im darauffolgenden Sägeverfahrensabschnitt als Plattenstapel weiter zersägt zu werden. Anschließend kann zwischen weiteren darauffolgenden Sägeverfahrensabschnitten wiederum ein Plattenaufstapeln und/oder Plattenabstapeln erfolgen. Genauso gut kann man auch mit zumindest einem Plattenstapel beginnen, wobei dann z.B. nach Durchführung des ersten Sägeverfahrensabschnittes ein Plattenabstapeln erfolgt, um dann in darauffolgenden Sägeverfahrensabschnitten die Platten in kleineren Plattenstapeln oder einzeln zu zersägen. Später kann dann natürlich zwischen späteren aufeinanderfolgenden Sägeverfahrensabschnitten auch wieder ein Plattenaufstapeln erfolgen. Ziel ist es immer, im darauffolgenden Sägeverfahrensabschnitt so viele Platten in Form eines Plattenstapels gemeinsam zu zersägen, wie das die jeweils in diesem Sägeverfahrensabschnitt zu berücksichtigenden Schnittlinien zulassen.

Erfindungsgemäße Verfahren können grundsätzlich verschiedene Anzahlen von Sägeverfahrensabschnitten aufweisen, je nachdem wie die Schnittlinien in den Schnittplänen angeordnet sind.

Wird beim erfindungsgemäßen Verfahren eine Platte in einem Sägeverfahrensabschnitt mittels einem oder mehreren Sägevorgängen zersägt, so entsteht dabei aus der vor dem Sägeverfahrensabschnitt vorliegenden Platte eine entsprechende Anzahl von kleineren Platten und gegebenenfalls Abfallstücke. Das Gleiche gilt für Plattenstapel. Die bei dem jeweiligen Sägeverfahrensabschnitt erzeugten Platten bzw. Plattenstapel können dann wiederum Ausgangsprodukt für den nächsten Sägeverfahrensabschnitt sein, um in diesem wiederum in kleinere Platten bzw. kleinformatige Plattenstapel zersägt zu werden. Je nach Anzahl der Sägeverfahrensabschnitte entstehen so aus einer einzelnen ursprünglichen Platte oder in anderen Worten Rohplatte bzw. einem Plattenstapel aus mehreren Rohplatten über eine entsprechende Anzahl von Zwischenformaten die Endformate. Sowohl beim Ausgangsformat, also der Rohplatte bzw. im Plattenstapel aus Rohplatten, als auch bei den Zwischenformaten wie auch bei den Endformaten handelt es sich letztendlich immer um Platten bzw. Plattenstapel. Da ein erfindungsgemäßes Verfahren eine unterschiedliche Anzahl von Sägeverfahrensabschnitten vorsehen kann, wird der sprachlichen Vereinfachung halber immer von einer Platte bzw. einem Plattenstapel gesprochen. Der Begriff der Platte kann also sowohl das Ausgangsformat in Form der Rohplatte, als auch das Zwischenformat und auch das Endformat bezeichnen. Dasselbe gilt für den Plattenstapel. Ein Plattenstapel umfasst jedenfalls immer eine gewisse Anzahl von aufeinander gestapelten Platten. Im jeweiligen Sägeverfahrensabschnitt können einzelne Platten aber auch Plattenstapel und sogar nebeneinanderliegende Platten oder nebeneinander angeordnete Plattenstapel zersägt werden, je nachdem wie dies die jeweiligen Schnittpläne zulassen.

Jede Platte ist einem Schnittplan zugeordnet. Jeder Schnittplan umfasst eine gewisse Anzahl von Schnittlinien, welche zum Teil zueinander parallel und zum anderen Teil zueinander abgewinkelt, insbesondere orthogonal, angeordnet sind. Die Schnittlinien sind die Linien, entlang derer die Platte in ihre Zwischen- und Endformate zersägt werden soll. Die Schnittlinien sind vorzugsweise linear bzw. in anderen Worten gerade.

Bei einer einzigen Platte bzw. Rohplatte kann das erfindungsgemäße Verfahren auch mit einem einzigen Schnittplan ausgeführt werden. Es kann in dem Fall z.B. sein, dass nach Durchführung des ersten Sägeverfahrensabschnitts an dieser Platte dadurch erzeugte Platten aufeinandergestapelt und anschließend als Stapel im darauffolgenden Sägeverfahrensabschnitt zersägt werden.

In der Regel werden aber verschiedene Platten und entsprechend diesen zugeordnete verschiedene Schnittpläne in dem erfindungsgemäßen Verfahren bearbeitet. Dann wird die jeweilige Platte einzeln oder im Stapel gemäß des jeweiligen Schnittplans zersägt. Das Verfahren kann also anhand eines einzigen, aber auch anhand von mehreren Schnittplänen durchgeführt werden. Hieraus resultiert auch die in Patentanspruch 1 verwendete Formulierung des gegebenenfalls jeweiligen Schnittplans.

Natürlich können auch mehrere Platten gemäß ein und demselben Schnittplan zersägt werden. Das erfindungsgemäße Verfahren wird insbesondere dann angewendet, wenn die verschiedenen Schnittpläne der verschiedenen Platten in Teilbereichen dieselben Schnittlinien und in anderen Teilbereichen voneinander verschiedene Schnittlinien aufweisen.

Die in dem ersten Sägeverfahrensabschnitt zu sägenden Schnittlinien können auch als Erstschnittlinien, die in dem zweiten Sägeverfahrensabschnitt zu sägenden Schnittlinien können auch als Zweitschnittlinien, die im dritten Sägeverfahrensabschnitt zu sägenden Schnittlinien können auch als Drittschnittlinien usw. bezeichnet werden, wie dies beim Stand der Technik an sich bekannt ist. Der Begriff der Schnittlinie darf allerdings nicht mit dem Begriff der Sägelinie verwechselt werden. Die Schnittlinien sind Teil eines Schnittplans und geben an, wo auf der jeweiligen Platte der Sägevorgang durchgeführt werden soll. Die Sägelinie hingegen ist die Linie der Plattenaufteilanlage entlang der die Säge der Plattenaufteilanlage entlanggefahren wird, um den Sägevorgang vorzunehmen. Dies ist an sich bekannt. Die Sägelinie ist bevorzugt linear bzw. gerade. Die Säge kann z.B. eine Untertischkreissäge sein, welche in einem Sägewagen entlang der Sägelinie verfahrbar ist, wie dies in zahlreichen an sich bekannten Plattenaufteilanlagen der Fall ist.

In einem Sägeverfahrensabschnitt werden jeweils entweder nur ein Sägevorgang entlang einer einzelnen Schnittlinie oder nur Sägevorgänge entlang von zueinander parallelen Schnittlinien durchgeführt. In einem Sägeverfahrensabschnitt wird die zumindest eine Platte oder der zumindest eine Plattenstapel also nie entlang von zueinander abgewinkelt, insbesondere orthogonal, angeordneten Schnittlinien zersägt. Dabei umfasst ein Sägeverfahrensabschnitt sowohl den Transport der jeweils zu zersägenden, zumindest einen Platte oder des jeweils zu zersägenden, zumindest einen Plattenstapels hin zur Sägelinie, den Vorgang des Sägens mittels Verfahren der Säge entlang der Sägelinie, des Weitertransports der Platte bis die nächste Schnittlinie über der Sägelinie liegt, den darauffolgenden Sägevorgang usw., bis alle in diesem Sägeverfahrensabschnitt zu erledigenden Sägevorgänge getätigt sind. Wie gesagt, kann dies aber auch nur ein einziger Sägevorgang sein.

Der Transport der zumindest einen Platte oder des zumindest einen Plattenstapels während des Sägeverfahrensabschnittes kann durch an sich bei Plattenaufteilanlagen bekannte Vorschubeinrichtungen bewerkstelligt werden. Bei bevorzugten Varianten der Erfindung ist auch vorgesehen, dass ein an sich bekannter Druckbalken der Plattenaufteilanlage die jeweils zumindest eine Platte oder den zumindest einen Plattenstapel während des Sägevorgangs auf einen Werkstückauflagetisch der Plattenaufteilanlage andrückt. Die Platten bzw. Plattenstapel liegen während der Durchführung des Verfahrens vorzugsweise auf einem entsprechenden Werkstückauflagetisch der Plattenaufteilanlage. Der Werkstückauflagetisch kann verschiedene Bereiche aufweisen. Der Werkstückauflagetisch bzw. seine Bereiche können als an sich bekannte Rollenbahnen, Luftkissentische, Borstenoberflächen und dergleichen ausgeführt sein.

Bei den Sägevorgängen ist günstigerweise vorgesehen, dass sie die jeweilige Platte oder der jeweilige Plattenstapel in zwei vollständig voneinander getrennte Teile zersägt.

Ein Sägeverfahrensabschnitt ist jedenfalls immer bereits abgeschlossen, bevor der nächste Sägeverfahrensabschnitt beginnt. Es können zwischen zwei aufeinanderfolgenden Sägeverfahrensabschnitten auch andere Verfahrensabschnitte, z.B. zum Transport, zum Drehen oder eben auch zum Plattenaufstapeln und/oder -abstapeln durchgeführt werden.

Beim Plattenaufstapeln handelt es sich um den Vorgang, bei dem auf eine Platte oder einen Plattenstapel eine weitere oder mehrere weitere Platten aufgestapelt werden. Beim Plattenabstapeln handelt es sich um den Vorgang, bei dem von einem Plattenstapel, also zumindest zwei aufeinander gestapelten Platten, zumindest eine Platte abgenommen bzw. abgestapelt wird. Für das Plattenabstapeln ist es natürlich selbstredend die Voraussetzung, dass vorab ein Plattenstapel vorliegt. Von einer einzelnen Platte kann keine Platte abgestapelt werden. Das Plattenaufstapeln und/oder Plattenabstapeln könnte zusammenfassend auch als Plattenumstapeln bezeichnet werden.

Durch das Plattenaufstapeln bzw. Plattenabstapeln ändert sich jedenfalls die Höhe des Plattenstapels oder in anderen Worten die Anzahl der in einem Plattenstapel aufeinandergestapelten Platten. Entsprechend werden, wenn zwischen zwei aufeinanderfolgenden Sägeverfahrensabschnitten ein Plattenaufstapeln oder Plattenabstapeln erfolgt ist, in diesen zwei aufeinanderfolgenden Sägeverfahrensabschnitten der oder die Sägevorgänge mit einer voneinander verschiedenen Anzahl von aufeinander gestapelten Platten durchgeführt. Liegt gar kein Plattenstapel sondern nur eine einzelne Platte vor, so ist die Anzahl der aufeinander gestapelten Platten gleich eins. Sind in einem Plattenstapel zwei Platten aufeinander gestapelt, so ist die Anzahl der aufeinander gestapelten Platten gleich zwei usw. Hierbei wird allerdings immer nur die Anzahl der übereinander liegenden Platten gezählt. Liegen einzelne Platten nebeneinander, so ist die Anzahl von aufeinander gestapelten Platten immer noch gleich eins. Liegen mehrere Plattenstapel nebeneinander, so werden immer nur die aufeinandergestapelten Platten in einem Plattenstapel gezählt.

Wie gesagt, können erfindungsgemäße Verfahren mit sehr unterschiedlichen Anzahlen von Platten und auch sehr unterschiedlichen Anzahlen von Sägeverfahrensabschnitten usw. durchgeführt werden.

Bei einfachen Ausgestaltungsformen erfindungsgemäßer Verfahren ist vorgesehen, dass zwischen jeweils zumindest zwei aufeinanderfolgenden Sägeverfahrensabschnitten wenn überhaupt nur ein Plattenabstapeln erfolgt. Bei diesem Verfahren reduziert sich die Anzahl der aufeinander gestapelten Platten von einem Sägeverfahrensabschnitt zum anderen oder sie bleibt gleich. Ist nur ein Abstapeln vorgesehen, so wird zu Beginn des Verfahrens natürlich immer von einem Plattenstapel ausgegangen.

Bevorzugt werden in erfindungsgemäßen Verfahren nur solche Plattenstapel verarbeitet, bei denen alle Platten des Plattenstapels jeweils dieselbe Länge und dieselbe Breite aufweisen. In der Dicke, also der kleinsten Dimension der jeweiligen Platte, können die Platten des Plattenstapels voneinander verschieden sein. Natürlich können die Platten im Plattenstapel aber auch jeweils dieselbe Dicke aufweisen.

Beim Stand der Technik sind Plattenaufteilanlagen in unterschiedlichsten Konstellationen bekannt. Vor allem können solche Plattenaufteilanlagen eine einzige Sägelinie aber auch mehrere hintereinander oder nebeneinander angeordnete Sägelinien aufweisen. Grundsätzlich können erfindungsgemäße Verfahren auch auf Plattenaufteilanlagen mit mehreren Sägelinien durchgeführt werden. Besonders bevorzugt ist aber vorgesehen, dass alle Sägevorgänge aller Sägeverfahrensabschnitte des Verfahrens mit genau einer entlang einer Sägelinie verfahrbaren Säge der Plattenaufteilanlage durchgeführt werden. Dabei kann es sein, dass die zur Durchführung des erfindungsgemäßen Verfahrens verwendete Plattenaufteilanlage eben nur genau eine und nicht mehrere Sägelinien aufweist. Es ist aber grundsätzlich auch denkbar, alle Sägevorgänge aller Sägeverfahrensabschnitte des Verfahrens mit genau einer entlang einer Sägelinie verfahrbaren Säge auf Plattenaufteilanlagen durchzuführen, welche an sich mehrere Sägelinien aufweisen. Unter dem Begriff einer Säge wird hierbei eine Sägeeinheit verstanden, die zur Durchführung eines Sägevorgangs verwendet wird. Es kann sich bei der Säge um ein einziges Sägeblatt, insbesondere Kreissägeblatt, handeln. Beim Stand der Technik ist es aber häufig auch vorgesehen, ein sogenanntes Vorritzer- und ein Hauptsägeblatt in einem Sägewagen gemeinsam verfahrbar anzuordnen. In diesem Fall wird die Einheit aus Vorritzer- und Hauptsägeblatt als eine Säge angesehen.

Grundsätzlich wäre es denkbar, das Plattenaufstapeln und/oder Plattenabstapeln bei erfindungsgemäßen Verfahren von Hand durch entsprechendes Bedienpersonal vornehmen zu lassen. Günstigerweise handelt es sich aber auch beim Plattenaufstapeln und/oder Plattenabstapeln um einen vollständig automatisierten Prozess. In diesem Sinn ist günstigerweise vorgesehen, dass das Plattenaufstapeln und/oder das Plattenabstapeln, vorzugsweise ausschließlich, mittels zumindest eines, vorzugsweise programmgesteuerten, Handhabungsgerätes der Plattenaufteilanlage durchgeführt wird.

Das Handhabungsgerät ist in bevorzugten Ausgestaltungsformen in drei Raumrichtungen bewegbar gelagert. Es kann hierzu an zueinander orthogonal angeordneten Laufschienen verfahrbar gelagert und in der Vertikalen verstellbar sein. Günstigerweise ist aber auch vorgesehen, dass das Handhabungsgerät um eine Vertikalachse drehbar gelagert ist. Bevorzugt ist das Handhabungsgerät über einem entsprechenden Bereich des Werkstückauflagetisches verfahrbar angeordnet. Je nach Ausgestaltungsform der jeweiligen Plattenaufteilanlage können auch mehrere Handhabungsgeräte in verschiedenen Bereichen der Plattenaufteilanlage vorgesehen sein. Das Handhabungsgerät ist günstigerweise so ausgestattet, dass es in benachbarte Bereiche hineingreifen kann, um dort Platten oder Plattenstapel abzuholen oder dort abzulegen. Bevorzugt ist jedenfalls auch vorgesehen, dass die zumindest eine Platte oder der zumindest eine Plattenstapel zwischen zumindest zwei der Sägeverfahrensabschnitte mittels des zumindest einen Handhabungsgerätes transportiert und/oder gedreht wird. Das Drehen erfolgt dann wie gesagt um die genannte Vertikalachse, welche bevorzugt normal auf der zu zersägenden Platte und/oder auf dem zu zersägenden Plattenstapel bzw. auch normal auf dem Werkstückauflagetisch steht.

Nach einem Plattenauf- und/oder -abstapeln erfolgt in bevorzugten Ausgestaltungsformen jeweils ein Ausrichten der aufeinander gestapelten Platten relativ zueinander, bevor der nächste Sägeverfahrensabschnitt durchgeführt wird. In diesem Zusammenhang ist also günstigerweise vorgesehen, dass die Platten in einem Plattenstapel nach dem Plattenaufstapeln und/oder Plattenabstapeln und vor der Durchführung des nachfolgenden Sägeverfahrensabschnitts unter Verwendung des zumindest einen Handhabungsgerätes aneinander ausgerichtet werden. Die Formulierung unter Verwendung des zumindest einen Handhabungsgerätes kann heißen, dass das Handhabungsgerät alleine das Ausrichten durchführt. Es kann aber auch heißen, dass das Handhabungsgerät mit anderen Bereichen oder Einrichtungen der Plattenaufteilanlage zum Ausrichten der Platten im jeweiligen Plattenstapel zusammenarbeitet. So kann das Handhabungsgerät z.B. zum Ausrichten der Platten in einem Plattenstapel mit einer an sich bekannten Anschlagschiene, einer an sich bekannten Vorschubeinrichtung, an sich bekannten Ausrichtnocken der Plattenaufteilanlage und dergleichen zusammenarbeiten.

Zum Manipulieren bzw. Angreifen der Platten oder Plattenstapel kann das Handhabungsgerät unterschiedliche Einrichtungen aufweisen. Z.B. kann vorgesehen sein, dass das Handhabungsgerät Saugglocken zum Ansaugen einer einzelnen Platte aufweist. In diesem Fall können einzelne Platten mittels der Saugglocken des Handhabungsgerätes angesaugt und so zusammen mit dem Handhabungsgerät transportiert und/oder gedreht werden. Die Verwendung von solchen Saugglocken ist bei Plattenaufteilanlagen an sich bekannt. Die Saugglocken können z.B. auch beim Auf- und/oder Abstapeln der Platten verwendet werden.

Zusätzlich oder anstelle dessen kann auch vorgesehen sein, dass das Handhabungsgerät einen Grundkörper und einen am Grundkörper schwenkbar und/oder verschiebbar gelagerten Schieber zum Schieben oder Ziehen einer einzelnen Platte oder eines Plattenstapels aufweist. Dies kann zunächst einmal dem Transport der zumindest einen Platte oder des zumindest einen Plattenstapels dienen. Der Schieber des Handhabungsgerätes kann aber auch zum Ausrichten von Platten im Plattenstapel genutzt werden, z.B. indem mittels des Schiebers die Platten eines Plattenstapels gegen einen Anschlag gezogen oder geschoben werden. Darüber hinaus kann ein solcher Schieber des Handhabungsgerätes aber auch zum Auf- und/oder Abstapeln der Platten verwendet werden, wie dies weiter hinten in der Figurenbeschreibung noch an einem Beispiel gezeigt wird.

Anstelle und/oder zusätzlich zu den Saugglocken und/oder zum Schieber kann auch vorgesehen sein, dass das Handhabungsgerät einen bzw. den Grundkörper und mehrere Klemmer zum Festklemmen einer einzelnen Platte oder eines Plattenstapels zwischen zumindest zwei relativ zueinander bewegbaren Klemmbacken des Klemmers aufweist. Solche Klemmer sind bei Plattenaufteilanlagen, insbesondere bei deren Vorschubeinrichtungen, an sich bekannt. Zwischen den zwei relativ zueinander bewegbaren Klemmbacken jedes Klemmers kann die Platte oder der Plattenstapel eingeklemmt werden, um so zusammen mit dem Handhabungsgerät transportiert zu werden. Bevorzugte Varianten sehen hierbei vor, dass alle Klemmer des Handhabungsgerätes auf einer Seite des Grundkörpers des Handhabungsgerätes angeordnet sind. Besonders bevorzugt ist vorgesehen, dass die Klemmer jeweils zwei Klemmbackenpaare mit jeweils zwei relativ zueinander bewegbaren Klemmbacken aufweisen, wobei die Klemmbackenpaare voneinander wegweisend am Grundkörper des Handhabungsgerätes angeordnet sind. Bei solchen Ausgestaltungsformen können Platten oder Plattenstapel von den Klemmbacken des einen Klemmbackenpaares auf der einen Seite des Klemmers und Platten oder Plattenstapel von den Klemmbacken des anderen Klemmbackenpaares auf der anderen Seite des Klemmers geklemmt werden.

Bevorzugt ist vorgesehen, dass die Klemmer distanziert zur Vertikalachse, um die das Handhabungsgerät drehbar ist, angeordnet sind. Bei großen Platten kann dies dazu genutzt werden, dass die Vertikalachse, um die die am Handhabungsgerät befestigte Platte zusammen mit dem Handhabungsgerät gedreht wird, im Bereich der Platte liegt. Dies spart Platz. Bei kleinen Platten kann dies dazu genutzt werden, dass diese in benachbarte Bereiche übergeben oder aus diesen geholt werden können.

Bevorzugte Varianten erfindungsgemäßer Verfahren sehen vor, dass die zumindest eine Platte oder der zumindest eine Plattenstapel bei der Durchführung der Sägeverfahrensabschnitte jeweils in einem ersten Bereich der Plattenaufteilanlage von einer Vorschubeinrichtung der Plattenaufteilanlage in einer Vorschubrichtung zur Sägelinie hin transportiert und, in Vorschubrichtung gesehen, hinter die Sägelinie in einen zweiten Bereich der Plattenaufteilanlage weiter transportiert wird, wobei das Plattenaufstapeln und/oder Plattenabstapeln von dem zumindest einen Handhabungsgerät im zweiten Bereich durchgeführt wird. Die hierbei zum Einsatz kommenden Vorschubeinrichtungen der Plattenaufteilanlage sind beim Stand der Technik in einer Vielzahl von Ausgestaltungsformen bekannt. In der Regel weisen die Vorschubeinrichtungen nebeneinander angeordnete Klemmer auf, mit denen sie die Platte oder den Plattenstapel oder nebeneinander liegende Platten und Plattenstapel greifen und in Vorschubrichtung hin zur Sägelinie oder von der Sägelinie weg transportieren können. Der erste Bereich der Plattenaufteilanlage bzw. entsprechend auch ein erster Bereich des Werkstückauflagetisches kann als Zuführbereich bezeichnet werden. Für die Ausgestaltung des zweiten Bereiches gibt es verschiedenste Möglichkeiten. Z.B. kann vorgesehen sein, dass der zweite Bereich ein um die Sägelinie außen herumführender Rückführbereich ist, in dem die zumindest eine Platte oder der zumindest eine Plattenstapel zwischen aufeinanderfolgenden Sägeverfahrensabschnitten von dem zumindest einen Handhabungsgerät in den ersten Bereich zurück transportiert wird bzw. werden. Es kann sich beim zweiten Bereich aber auch um ein bezüglich der Sägelinie dem ersten Bereich gegenüberliegenden Bereich handeln. Insbesondere dann kann auch vorgesehen sein, dass die zumindest eine Platte oder der zumindest eine Plattenstapel zwischen zwei der aufeinanderfolgenden Sägeverfahrensabschnitten von dem zumindest einen Handhabungsgerät aus dem zweiten Bereich über die Sägelinie hinweg in den ersten Bereich zurück transportiert wird.

Insbesondere diese zweiten Bereiche können zum Auf- und/oder Abstapeln der Platten, zum Transport und auch zum Zwischenlagern der Platten bzw. Plattenstapel genutzt werden. Insofern sehen bevorzugte Varianten der Erfindung auch vor, dass die zumindest eine Platte oder der zumindest eine Plattenstapel im zweiten Bereich zwischengelagert werden. Besonders bevorzugt ist auch vorgesehen, dass bei dem Plattenaufstapeln zumindest eine vorab zwischengelagerte Platte oder zumindest ein vorab zwischengelagerter Plattenstapel mit aufgestapelt wird.

Weitere Merkmale und Einzelheiten bevorzugter Ausgestaltungsformen erfindungsgemäßer Verfahren und der dazu verwendbaren Plattenaufteilanlagen ergeben sich beispielhaft aus der nachfolgenden Figurenbeschreibung. Es zeigen:
- Fig. 1: eine schematisierte Draufsicht auf eine erste Plattenaufteilanlage;
- Fig. 2: eine schematisierte Draufsicht auf eine zweite Plattenaufteilanlage;
- Fig. 3: einen Vertikalschnitt entlang der jeweiligen Sägelinie aus Fig. 1 und 2;
- Fig. 4 bis 12: Darstellungen zu einer bevorzugten Ausgestaltungsform eines Handhabungsgerätes;
- Fig. 13: eine Draufsicht auf eine erste Platte mit einem darauf eingezeichneten Schnittplan;
- Fig. 14: eine Draufsicht auf eine zweite Platte mit einem darauf eingezeichneten Schnittplan;
- Fig. 15: die beiden Platten gemäß Fig. 13 und 14 übereinandergestapelt dargestellt und
- Fig. 16: eine dritte Platte mit einem dritten Schnittplan.

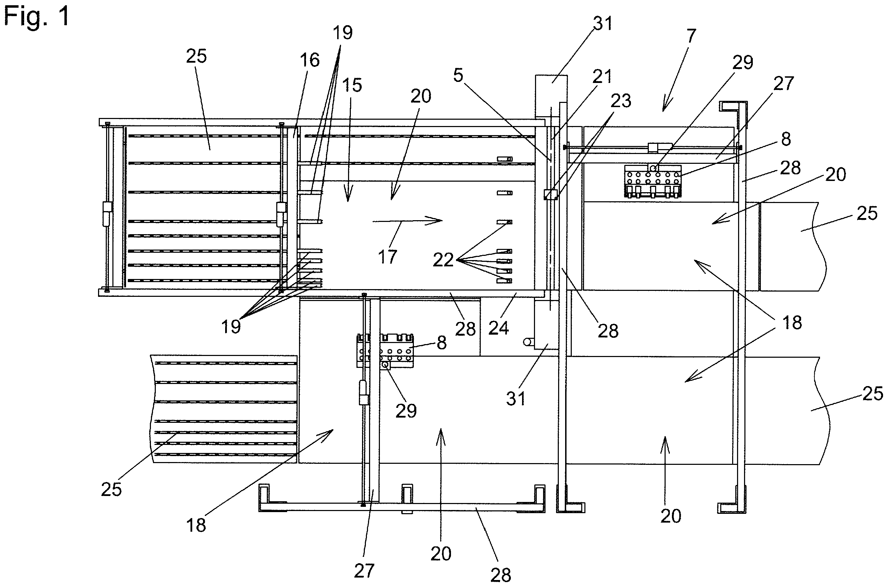

Die in Fig. 1 dargestellte Plattenaufteilanlage 7 ist ein Beispiel mit nur einer Sägelinie 5, wobei der Sägelinie 5 die zu zersägenden Platten 1 oder Plattenstapel 2 mittels der Vorschubeinrichtung 16 vom Zusatztisch 25 über den ersten Bereich 15 des Werkstückauflagetisches 20 in Vorschubrichtung 17 zugeführt werden. Die Vorschubeinrichtung 16 weist an sich bekannte Klemmer 19 auf, mit der sie die Platten 1 und/oder Plattenstapel 2 in an sich bekannter Weise greifen kann. Die Vorschubeinrichtung 16 ist in Vorschubrichtung 17 in Richtung hin zur Sägelinie 5 aber auch in der entgegengesetzten Richtung bewegbar, um so die zu zersägenden Platten 1 und/oder Plattenstapel 2 in die entsprechende Richtung transportieren zu können. Im gezeigten ersten Ausführungsbeispiel der Plattenaufteilanlage 7 befinden sich im ersten Bereich 15, in den Werkstückauflagetisch 20 eingelassen, eine Reihe von Ausrichtnocken 22, welche zum Ausrichten der Platten 1 oder Plattenstapel 2 in an sich bekannter Weise über die Auflageebene des Werkstückauflagetisches 20 ausgefahren und unter diese auch wieder zurückgezogen werden können.

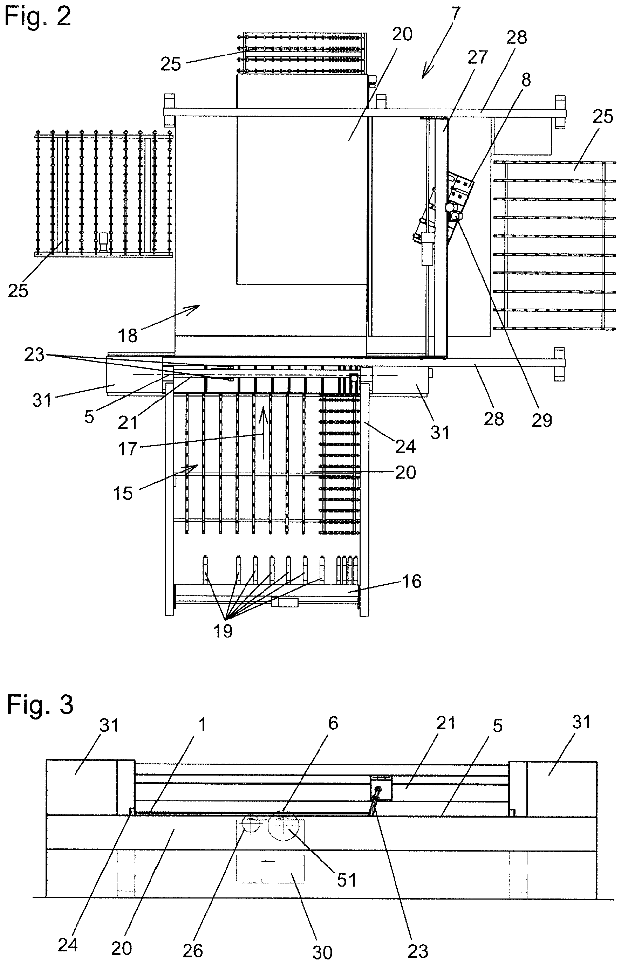

Über der Sägelinie 5 befindet sich ein an sich bekannter Druckbalken 21, welcher an den Druckbalkenstehern 31 vertikal verfahrbar gelagert ist und beim jeweiligen Sägevorgang dazu verwendet wird, die Platte 1 und/oder den Plattenstapel 2 auf den Werkstückauflagetisch 20 anzudrücken. Dies kann entsprechend wie in Fig. 3 dargestellt, ausgeführt sein. Die Säge 6 ist entlang der Sägelinie 5 verfahrbar, um die Sägevorgänge durchzuführen. Die Sägelinie 5 ist bevorzugt gerade ausgeführt und reicht bevorzugt von einem Druckbalkensteher 31 zum anderen Druckbalkensteher 31. In den hier gezeigten Ausführungsbeispielen ist eine beim Stand der Technik sehr weit verbreitete Ausgestaltungsform der Säge 6 dargestellt. Sie umfasst in der hier gezeigten Variante ein Vorritzersägeblatt 26 und ein Hauptsägeblatt 51. Das Vorritzersägeblatt 26 wird, wie an sich bekannt, zum Anritzen der Platte und das Hauptsägeblatt 51 zum vollständigen Durchsägen der Platte 1 oder des Plattenstapels 2 genutzt. Das Vorritzersägeblatt 26 kann natürlich auch weggelassen werden.

Beide Sägeblätter können heb- und senkbar im Sägewagen 30 angeordnet sein. Mit dem Sägewagen 30 wird die Säge 6 jedenfalls entlang der Sägelinie 5 verfahren. All dies ist an sich bekannt und muss nicht weiter erläutert werden.

Bevorzugt befindet sich, wie in Fig. 3 und in Fig. 1 auch dargestellt, am Druckbalken 21 auch zumindest ein Ausrichtnocken 23, welcher vertikal, aber auch parallel zur Sägelinie 5 am Druckbalken verfahrbar gelagert ist. Dieser Ausrichtnocken 23 kann dazu verwendet werden, eine auf dem Werkstückauflagetisch 20 im Bereich der Sägelinie 5 liegende Platte 1 oder einen entsprechenden Plattenstapel 2 gegen eine Anschlagschiene 24 zu drücken, um so eine entsprechende Ausrichtung der Platte 1 oder des Plattenstapels 2 zu erzielen. Dies ist an sich bekannt. Natürlich können auch andere Arten und Konfigurationen von Sägen für erfindungsgemäße Verfahren eingesetzt werden.

In Vorschubrichtung 17 gesehen hinter der Sägelinie 5 befindet sich ein zweiter Bereich 18, welcher hier in diesem Ausführungsbeispiel gemäß Fig. 1 als Rückführbereich um die Sägelinie 5 herumführt, sodass Platten 1 und/oder Plattenstapel 2 im zweiten Bereich 18 um die Sägelinie 5 herum wieder zum ersten Bereich 15 zurückgeführt werden können. Auch im zweiten Bereich 18 befinden sich der Werkstückauflagetisch 20 auf dem die Platten 1 und/oder Plattenstapel 2 liegend transportiert, gedreht und auch zwischengelagert werden können. Zur Zwischenlagerung können auch die verschiedenen an den zweiten Bereich 18 anschließenden Zusatztische 25 genutzt werden. Die Zusatztische 25 können auch zur Abfuhr fertig zersägter Platten 1 oder Plattenstapel 2 aber auch zur Zufuhr von Rohplatten genutzt werden.

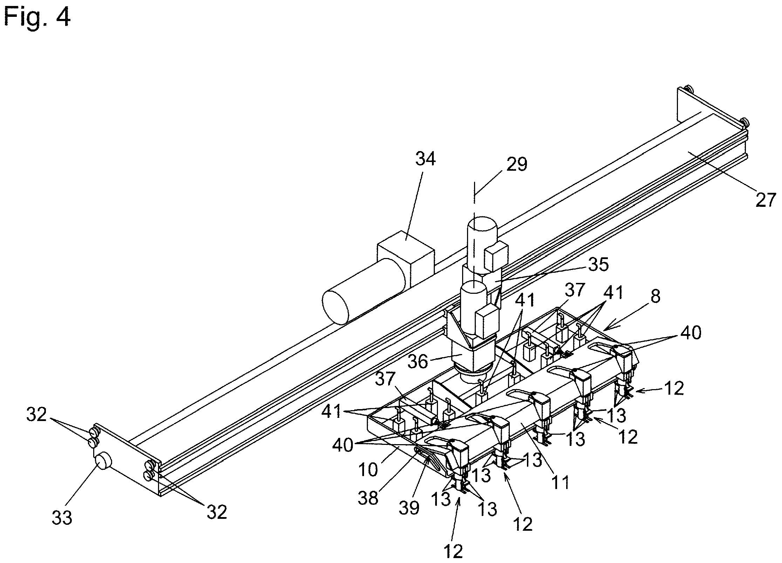

Zur Handhabung der Platten 1 und/oder Plattenstapel 2 im zweiten Bereich sind in der Plattenaufteilanlage 7 gemäß Fig. 1 zwei Handhabungsgeräte 8 vorgesehen, wie sie anhand der Fig. 4 bis 12 weiter hinten noch im Detail erklärt werden. Mit den Handhabungsgeräten 8 können die Platten 1 und/oder Plattenstapel 2 jedenfalls im zweiten Bereich transportiert, gedreht, auf- und/oder abgestapelt und auch zwischengelagert werden. Insbesondere ist auch ein Rücktransport der Platten 1 und/oder Plattenstapel 2 im zweiten Bereich 18 hin zum ersten Bereich 15 möglich.

Jedes der Handhabungsgeräte 8 ist in drei Raumrichtungen bewegbar. In der einen Horizontalrichtung durch Verfahren entlang der Laufschiene 27, in der zweiten Horizontalrichtung durch Verfahren entlang der Laufschienen 28 und in vertikaler Richtung, also normal zur Plattebene durch entsprechendes Anheben und/oder Absenken. Zusätzlich sind beide Handhabungsgeräte 8 jeweils um Vertikalachsen 29 drehbar. Beide hier gezeigten Handhabungsgeräte 8 weisen sowohl Saugglocken 9 als auch Schieber 11 als auch Klemmer 12 auf, wie dies an den nachfolgenden Fig. 4 bis 13 noch im Detail erläutert wird.

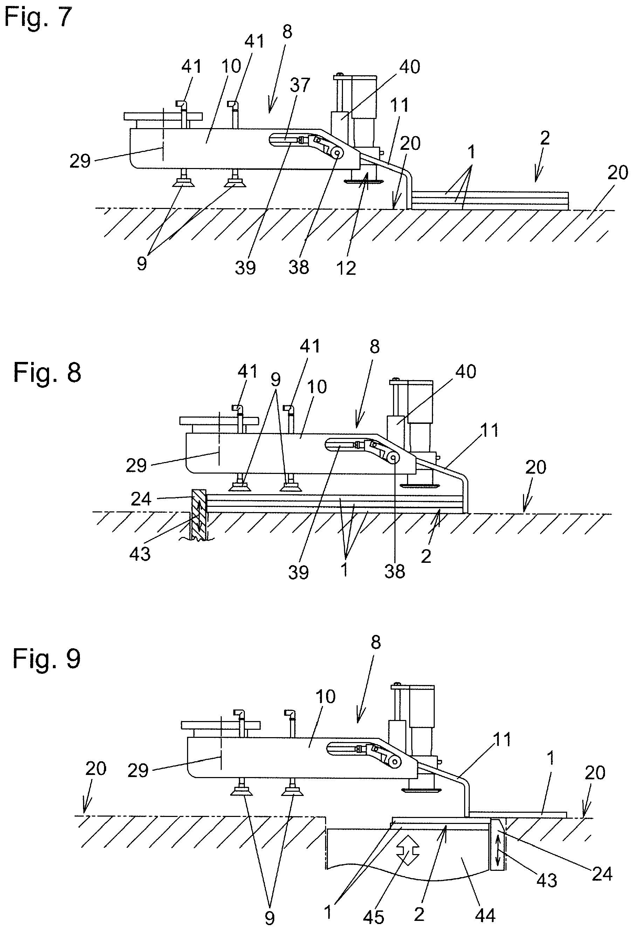

Wird die Plattenaufteilanlage 7 gemäß Fig. 1 zur Durchführung eines erfindungsgemäßen Verfahrens eingesetzt, so werden alle Sägevorgänge aller Sägeverfahrensabschnitte des Verfahrens mit genau einer, nämlich der einzigen hier entlang der Sägelinie 5 verfahrbaren Säge 6 der Plattenaufteilanlage 7 durchgeführt. Die zumindest eine Platte 1 oder der zumindest eine Plattenstapel 2 wird bei der Durchführung des jeweiligen Sägeverfahrensabschnitts jeweils in dem ersten Bereich 15 von der Vorschubeinrichtung 16 in Vorschubrichtung 17 zur Sägelinie 5 hin transportiert und dort zersägt. Hinter der Sägelinie 5, also im zweiten Bereich 18 erfolgt erfindungsgemäß das zwischen zumindest zwei der aufeinanderfolgenden Sägeverfahrensabschnitte durchzuführende Plattenaufstapeln und/oder Plattenabstapeln. Hierzu wird eines der Handhabungsgeräte 8 eingesetzt. Der zweite Bereich 18 kann dann auch als um die Sägelinie 5 herumführender Rückführbereich dazu benutzt werden, die jeweilige Platte 1 und/oder den jeweiligen Plattenstapel 2 zwischen zwei aufeinanderfolgenden Sägeverfahrensabschnitten mittels der beiden Handhabungsgeräte 8 in den ersten Bereich 15 zurück zu transportieren. Dabei kann mittels der Handhabungsgeräte 8 auch ein entsprechendes Drehen der Platte und/oder des Plattenstapels durchgeführt werden. Auch ein Zwischenlagern im zweiten Bereich 18 und/oder gegebenenfalls auch auf einem Zusatztisch 25 ist möglich. Durch ihre Ausgestaltungsform ist es möglich, dass mit den Handhabungsgeräten 8 jeweils in benachbarte Bereiche hineingegriffen werden kann. So kann das eine der Handhabungsgeräte 8 unter dem entsprechend angehobenen Druckbalken hindurch in den ersten Bereich 15 hineingreifen, um dort Platten und/oder Plattenstapel abzuholen oder dort hin zu transportieren. Genauso gut können die Handhabungsgeräte 8 auch auf die Zusatztische 25 zugreifen. Darüber hinaus kann das eine der Handhabungsgeräte 8 Platten und/oder Plattenstapel auch über die vorzugsweise dann abgesenkte Anschlagschiene 24 aus dem zweiten Bereich 18 wieder in den ersten Bereich 15 zurückschieben. Dort können die so zurück transportierten Platten 1 oder Plattenstapel 2 von der Vorschubeinrichtung 16 wieder gegriffen und zur Durchführung des darauf folgenden Sägeverfahrensabschnitts wieder der Sägelinie 5 zugeführt werden. Das Ausrichten der Platten 1 und/oder Plattenstapel 2 vor der Durchführung des jeweils nächsten Sägeverfahrensabschnitts kann in Richtung parallel zur Vorschubrichtung 17 in an sich bekannter Weise mittels der Klemmer 19 der Vorschubeinrichtung 16 und der Ausrichtnocken 22 durchgeführt werden. Zum Ausrichten der Platten 1 und/oder Plattenstapel 2 in Richtung orthogonal zur Vorschubrichtung 17 können entweder die Ausrichtnocken 23 am Druckbalken 21, wie in Fig. 3 gezeigt, verwendet werden. Alternativ ist es auch möglich, wie weiter hinten noch anhand von Fig. 8 erläutert, das eine der Handhabungsgeräte 8 im Zusammenspiel mit der Anschlagschiene 24 zur Ausrichtung der Platten 1 und/oder Plattenstapel 2 zu verwenden. Auf diese Art und Weise können verschiedenste Ausgestaltungsformen erfindungsgemäßer Verfahren auf der Plattenaufteilanlage 7 gemäß Fig. 1 durchgeführt werden.

In Fig. 2 ist eine schematisierte Draufsicht auf eine zweite Plattenaufteilanlage 7 gezeigt, mit der das erfindungsgemäße Verfahren ebenfalls ausgeführt werden kann. Hier ist der zweite Bereich 18 nicht als um die Sägelinie 5 herumführender Rückführbereich ausgebildet. Es ist vielmehr vorgesehen, dass mit dem im zweiten Bereich 18 angeordneten Handhabungsgerät 8 Platten 1 und/oder Plattenstapel 2 vor dem ersten Sägeverfahrensabschnitt aus dem zweiten Bereich 18 über die Sägelinie 5 hinweg in den ersten Bereich 15 geschoben werden. Dort können sie von der Vorschubeinrichtung 16 mit deren Greifer 19 gegriffen und in an sich bekannter Weise in Vorschubrichtung 17 zur Durchführung des ersten Sägeverfahrensabschnitts transportiert werden. Die Säge 6, die Sägelinie 5, der Druckbalken 21 und auch der Ausrichtnocken 23 sind in Fig. 3 dargestellt und im Zusammenhang mit Fig. 1 schon erläutert worden. Auch hier ist günstigerweise vorgesehen, dass die zumindest eine Platte 1 oder der zumindest eine Plattenstapel 2 bei der Durchführung der Sägeverfahrensabschnitte jeweils in dem ersten Bereich 15 der Plattenaufteilanlage 7 von einer Vorschubeinrichtung 16 der Plattenaufteilanlage 7 in einer Vorschubrichtung 17 zur Sägelinie 5 hin transportiert und, in Vorschubrichtung 17 gesehen, hinter die Sägelinie 5 in den zweiten Bereich 18 der Plattenaufteilanlage 7 weiter transportiert wird, wobei das Plattenaufstapeln und/oder Plattenabstapeln von dem zumindest einen Handhabungsgerät 8 im zweiten Bereich 18 durchgeführt wird. Im Gegensatz zu der Variante gemäß Fig. 1 ist bei der Plattenaufteilanlage gemäß Fig. 2 aber dann bevorzugt vorgesehen, dass die zumindest eine Platte 1 oder der zumindest eine Plattenstapel 2 zwischen zwei der aufeinanderfolgenden Sägeverfahrensabschnitten von dem zumindest einen Handhabungsgerät 8 aus dem zweiten Bereich 18 über die Sägelinie 5 hinweg in den ersten Bereich 15 zurück transportiert wird. Das Handhabungsgerät 8 gemäß Fig. 2 ist genauso ausgebildet wie die Handhabungsgeräte 8 gemäß Fig. 1, sodass es Platten 1 wie auch Plattenstapel 2 in zweiten Bereich 18 auf dem Werkstückauflagetisch 20 transportieren, drehen, auf- und abstapeln, aber auch zwischenlagern kann. Zum Zwischenlagern können auch die Zusatztische 25 verwendet werden. Das Handhabungsgerät 8 kann durch seine Ausbildung entsprechend auf diese Zusatztische 25 zugreifen und unter dem Druckbalken 21 hindurchgreifen.

In Fig. 4 sind das Handhabungsgerät 8 und die Laufschiene 27 dargestellt. Die Laufschiene 27 und damit auch das Handhabungsgerät 8 sind mittels der Laufrollen 32 und des Antriebsrades 33 entlang den in Fig. 4 nicht dargestellten Laufschienen 28 bewegbar. Hierzu ist der erste Antrieb 34 vorgesehen. Mittels des zweiten Antriebs 35 ist das Handhabungsgerät 8 entlang der Laufschiene 27 verfahrbar. Zusätzlich ist das Handhabungsgerät 8 noch entlang der vertikalen, also parallel zur Vertikalachse 29, heb- und senkbar und vom Drehantrieb 36 eben auch um die Vertikalachse 29 drehbar.

Das hier dargestellte Handhabungsgerät 8 weist sowohl Saugglocken 9 mit den jeweiligen Sauganschlüssen 41 als auch einen relativ zum Grundkörper 10 des Handhabungsgerätes 8 verschiebbar und schwenkbar gelagerten Schieber 11 als auch mehrere Klemmer 12 auf, wie dies anhand der nachfolgenden Figuren noch weiter im Detail erläutert wird.

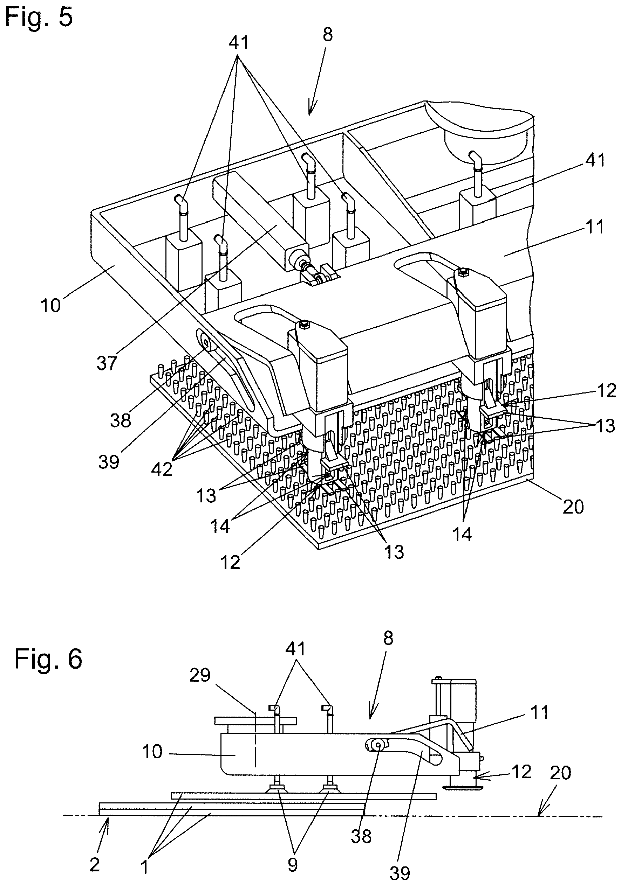

In Fig. 5 sind die Sauganschlüsse 41 der Saugglocken 9 zu sehen. Diese führen in hier nicht dargestellter aber an sich bekannter Art und Weise zu einer entsprechenden Unterdruckquelle, mit der der zum Ansaugen der Platten in den Saugglocken 9 benötigte Unterdruck bereitgestellt werden kann. In Fig. 5 ist aber auch einer der Schieberantriebe 37 gut zu sehen. Mit den Schieberantrieben 37 kann der Schieber 11, geführt durch das jeweils in der Führungskulisse 39 laufende Führungsrad 38, verfahren werden, um so den Schieber 11 relativ zum Grundkörper 10 zu verschieben aber auch zu verschwenken.

In Fig. 5 ist der Werkstückauflagetisch 20 als Borstentisch dargestellt. Er weist eine Vielzahl von in Reihen hintereinander angeordneten Borsten 42 auf, auf denen die Platte 1 und/oder der Plattenstapel 2 aufliegen können, um so über den Werkstückauflagetisch 20 transportiert oder auf diesem gedreht zu werden. Die Klemmbacken 13 der Klemmer 12 sind günstigerweise so ausgebildet, dass sie möglichst wenig mit den Borsten 42 kollidieren, sodass die Abnutzung an den Borsten 42 so gering wie möglich gehalten wird.

Dies kann z.B. dadurch erreicht werden, dass das Handhabungsgerät 8 bzw. die Handhabungsgeräte 8 so verfahren werden, dass die Klemmbacken 13 möglichst nicht mit den Borsten 42 kollidieren, z.B. indem sich die Klemmbacken 13 in Bereichen zwischen den Borsten 42 bewegen. Es ist auch möglich, dass dafür in Teilbereichen Borsten 42 ausgespart sind oder eine angepasste Teilung aufweisen.

Alternativ ist es auch möglich, dass das Handhabungsgerät 8 bzw. die Handhabungsgeräte 8 bevorzugt auf definierten, gleichen Bahnen verfahren wird bzw. werden, auf denen die von den Klemmbacken 13 überfahrenen Borsten 42 einem erhöhten Verschleiß ausgesetzt sind, die Tragfähigkeit der Borsten 42 in den nicht bzw. selten überfahrenen, bevorzugt benachbarten, Bereichen aber ausreicht, um die Platte 1 und/oder den Plattenstapel 2 sicher tragen zu können.

Ist der Werkstückauflagetisch 20 als Rollenbahn ausgebildet, dann verfahren die Klemmbacken 13 bevorzugt in Bereichen zwischen den Rollen der Rollenbahn. Bei Ausbildung des Werkstückauflagetisches 20 als Luftkissentisch sind in den Auflageflächen des Werkstückauflagetisches 20 günstigerweise Nuten als Aussparungen für die Klemmbacken 13 vorgesehen. Dies kann sinngemäß auch für jede andere Art von Auflagen gelten.

Der weitere Aufbau der Klemmer 12 des Handhabungsgeräts 8 dieses Ausführungsbeispiels wird weiter hinten noch im Detail erläutert.

Fig. 6 zeigt beispielhaft wie eine Platte 1 von dem auf dem Werkstückauflagetisch 20 liegenden Plattenstapel 2 mittels der Saugglocken 9 abgehoben werden kann. Diese so mittels der Saugglocken 9 an das Handhabungsgerät 8 angesaugte Platte 1 kann dann transportiert und/oder gedreht und auch auf- oder abgestapelt werden. Das Drehen erfolgt durch das Drehen des Handhabungsgerätes 8 um seine Vertikalachse 29. Die Funktion und der Einsatz solcher Saugglocken 9 bei Plattenaufteilanlagen 7 ist an sich bekannt und muss nicht weiter erläutert werden.

Fig. 7 zeigt, wie der Schieber 11 dazu verwendet werden kann, ein auf dem Werkstückauflagetisch 20 aufliegenden Plattenstapel 2 zu verschieben. Dies funktioniert natürlich genauso auch mit einer einzelnen Platte 1.

Fig. 8 zeigt, wie dieser Schieber 11 dazu genutzt werden kann, die Platten 1 eines Plattenstapels 2 gegen eine im Werkstückauflagetisch 20 versenkbare und aus dieser heraushebbare Anschlagschiene 24 zu drücken, um so die Platten 1 im Plattenstapel 2 auszurichten. Die Anschlagschiene 24 ist hierzu in den Bewegungsrichtungen 43 heb- und senkbar im Werkstückauflagetisch 20 angeordnet. Im vollständig abgesenkten Zustand kann eine Platte 1 oder ein Plattenstapel 2 über die Anschlagschiene 24 hinweggeschoben werden. Wird die Anschlagschiene 24 dann in der entsprechenden Bewegungsrichtung 45 über das Auflageniveau des Werkstückauflagetisches 20 angehoben, so kann sie als Anschlagschiene in der in Fig. 8 gezeigten Art und Weise zusammen mit dem Handhabungsgerät 8 zur Ausrichtung der Platten 1 bzw. der Plattenstapel 2 verwendet werden. Dies kann insbesondere in dem Ausführungsbeispiel der Plattenaufteilanlage 7 gemäß Fig. 1 im Bereich des Übergangs zwischen dem zweiten Bereich 18 und dem ersten Bereich 15 so realisiert werden.

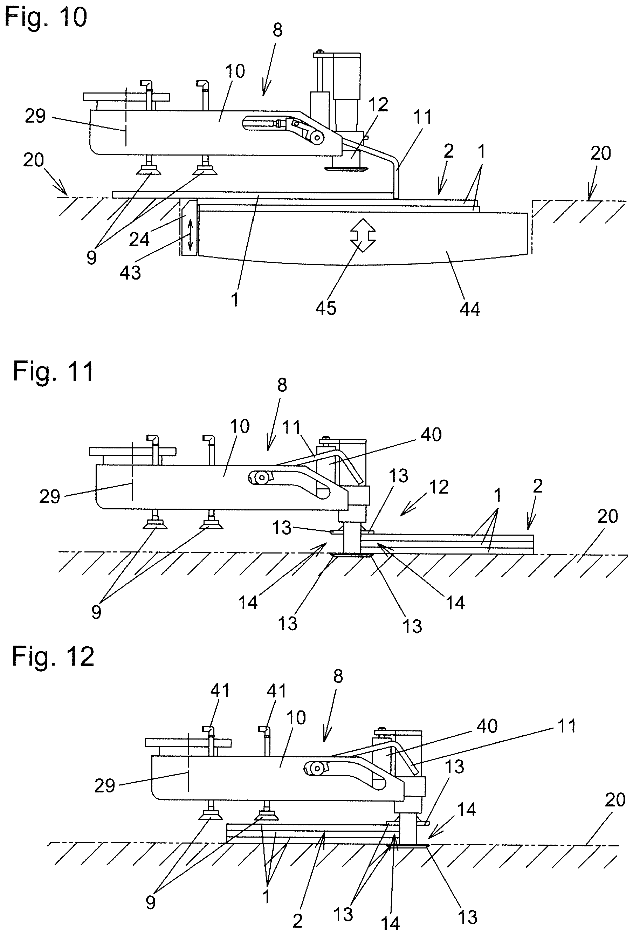

Die Fig. 9 und 10 zeigen beispielhaft, wie ein solcher Schieber 11 in Zusammenwirkung mit einem entsprechenden Anschlaglineal 24 und einem entsprechenden Senk- und Hebetisch 44, welche in den Bewegungsrichtungen 43 und 45 bewegbar sind, auch zum Abstapeln von Platten 1 verwendet werden kann. Ein Aufstapeln ist entsprechend auch möglich. Hierzu werden der Senk- und Hebetisch 44 und auch die Anschlagschiene 24 immer so positioniert, dass die oberste Platte 1 zum Abstapeln abgeschoben oder eben eine entsprechende neue Platte 1 aufgeschoben werden kann.

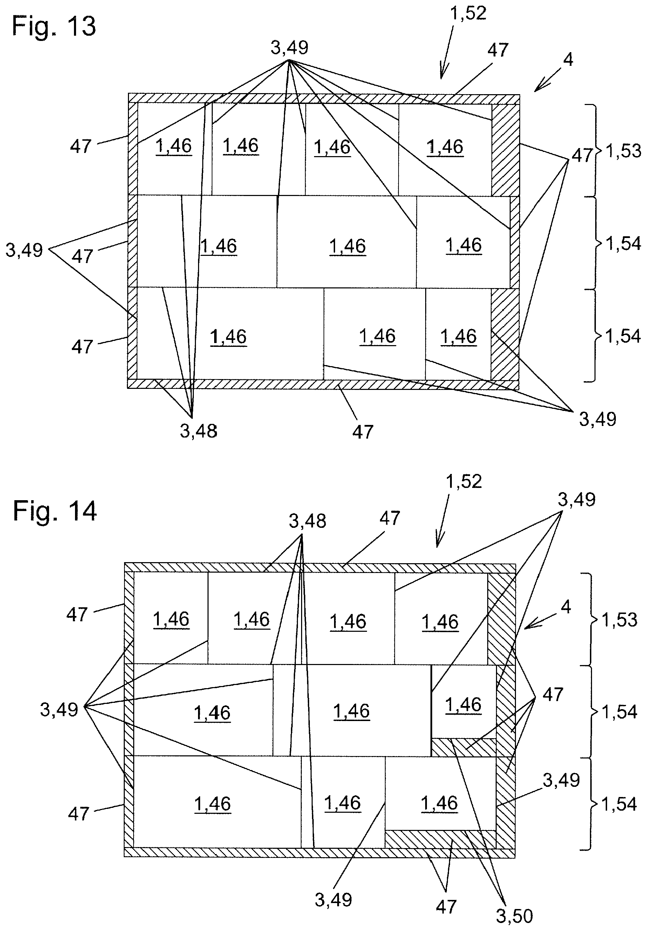

In Fig. 11 und 12 ist der Aufbau und die Funktion der Klemmer 12 des hier gezeigten Handhabungsgerätes 8 genauer dargestellt. Konkret weist hier jeder Klemmer 12 zwei Klemmbackenpaare 14 auf, welche jeweils voneinander wegweisend am Grundkörper 10 befestigt sind. Jedes Klemmbackenpaar 14 weist jeweils zwei voneinander weg und aufeinander zu bewegbare Klemmbacken 13 auf. Dies wird durch Bewegung des jeweils oberen Klemmbackens 13 mittels des Klemmerantriebs 40 realisiert. In Fig. 14 ist gut zu sehen, dass in bevorzugten Ausgestaltungsformen, wie der hier gezeigten, alle Klemmer 12 auf einer Seite des Grundkörpers 10 des Handhabungsgerätes 8 angeordnet sind. Bevorzugt sind die Klemmer 12 auch distanziert von der Vertikalachse 29 angeordnet. Dies hat zwei Vorteile. Zum einen kann so das Handhabungsgerät 8, wie in Fig. 11 gezeigt, dazu benutzt werden, in benachbarte Bereiche zu greifen, um dort Platten 1 und/oder Plattenstapel 2 abzuholen oder dort hin zu transportieren. Der weitere Vorteil dieser Ausgestaltungsform ist der, dass die Platten 1 oder Plattenstapel 2 auch platzsparend so gegriffen werden können, dass die Vertikalachse 29 über den Platten 1 bzw. Plattenstapel 2 zu liegen kommt. Dies ist besonders dann günstig, wenn sehr große Platten 1 und/oder Plattenstapel 2 bewegt und/oder gedreht werden müssen.

Anhand der Fig. 13 bis 16 werden nachfolgend Beispiele für das Durchführen des erfindungsgemäßen Verfahrens erläutert. Es wird dabei betont, dass es sich hier nur um Beispiele handelt und das Verfahren, wie bereits dargelegt, auch in vielen anderen Ausgestaltungsformen realisiert werden kann. Der einfacheren Nachvollziehbarkeit halber, werden im Folgenden die Platten 1 mit dem ursprünglichen Format auch als Rohplatten 52 bezeichnet. Die fertig zugeschnittenen Platten 1 werden auch als Endformate 46 bezeichnet. Die jeweils mit Durchführung des ersten Sägeverfahrensabschnitts erzeugten Platten 1 werden als Plattenstreifen 53 und 54 bezeichnet.

Die Fig. 13 und 14 zeigen Draufsichten auf die Platten 1 und die diesen jeweils zugordneten Schnittpläne 4. Die Schnittpläne 4 geben an, entlang von welchen Schnittlinien 3 die jeweilige Platte 1 bzw. Rohplatte 52 zersägt werden muss, um so die gewünschten kleineren Platten 1 in Form der Endformate 46 zu erzeugen. Bei der Platte 1 gemäß Fig. 13 und dem hierfür vorgesehenen Schnittplan 4 bedarf es zum vollständigen Aufteilen der ursprünglichen Platte bzw. Rohplatte 52 in die Endformate 46 der Durchführung von zwei aufeinanderfolgenden Sägeverfahrensabschnitten. In beiden Sägeverfahrensabschnitten werden ausschließlich Sägevorgänge an zueinander parallelen Schnittlinien 3 durchgeführt. Bei der Rohplatte 52 gemäß Fig. 13 bzw. deren Schnittplan 4 werden im ersten Sägeverfahrensabschnitt die Sägevorgänge entlang der als Erstschnittlinien 48 gekennzeichneten Schnittlinien 3 durchgeführt. Hierdurch wird die Rohplatte 52 in Plattenstreifen 53 und 54 zersägt, wobei zusätzlich zur Besäumung die Abfallstreifen 47 abgetrennt werden. Anschließend müssen im darauffolgenden zweiten Sägeverfahrensabschnitt die im Ergebnis des ersten Sägeverfahrensabschnitts vorliegenden Platten 1 in Form der Plattenstreifen 53 und 54 entlang der als Zweitschnittlinien 49 gekennzeichneten Schnittlinien 3 in die Platten 1 in Form der Endformate 46 aufgeteilt werden, wobei wiederum jeweils Abfallstreifen 47 mit abgetrennt werden. Bei der beim Stand der Technik üblichen Vorgehensweise würden hierfür zunächst alle Sägevorgänge des ersten Sägeverfahrensabschnitts an der einzelnen in Fig. 13 gezeigten Rohplatte 52 durchgeführt. Anschließend würden die daraus erzeugten Platten 1 in Form der Plattenstreifen 53 und 54 einzeln nacheinander im zweiten Sägeverfahrensabschnitt zersägt, wobei die jeweils gerade nicht zu zersägenden Plattenstreifen 53 bzw. 54 zwischengelagert würden.

Betrachtet man nun die ursprüngliche Platte 1 bzw. Rohplatte 52 gemäß Fig. 14 und deren Schnittplan 4, so sind zur vollständigen Aufteilung dieser Rohplatte 52 in die Endformate 46 insgesamt drei Sägeverfahrensabschnitte notwendig. Im ersten Sägeverfahrensabschnitt werden die Sägevorgänge entlang der als Erstschnittlinien 48 gekennzeichneten Schnittlinien 3 und dann im zweiten Sägeverfahrensabschnitt die entlang der als Zweitschnittlinien 49 gekennzeichneten Schnittlinien 3 durchgeführt. Anschließend müssen zur vollständigen Aufteilung der Rohplatte 52 gemäß Fig. 14 aber auch noch im dritten Sägeverfahrensabschnitt die Sägevorgänge entlang der als Drittschnittlinien 50 gekennzeichneten Schnittlinien 3 durchgeführt werden.

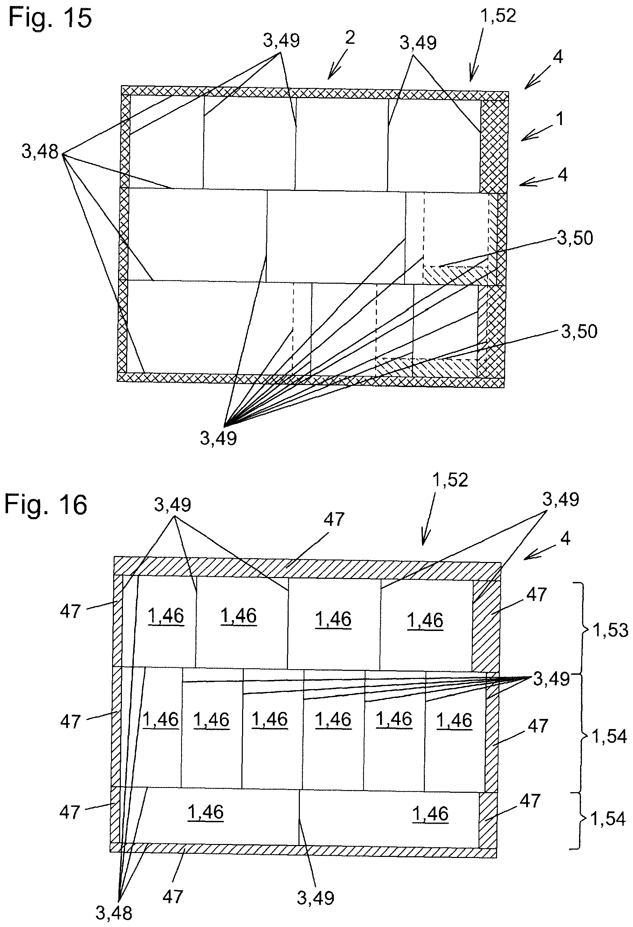

Fig. 15 zeigt die ursprünglichen Platten 1 bzw. Rohplatten 52 der Fig. 13 und 14 und deren Schnittpläne 4 in einem Plattenstapel 2 aufeinandergestapelt, wobei in der gezeigten Draufsicht die Platten quasi durchsichtig dargestellt sind, sodass man die Schnittlinien 3 beider Schnittpläne 4 sieht. Die Darstellung in Fig. 15 ist so zu verstehen, dass die Rohplatte 52 gemäß Fig. 13 auf der Rohplatte 52 gemäß Fig. 14 liegt und diejenigen Schnittlinien 3 des Schnittplans 4 der Rohplatte 52 gemäß Fig. 14, welche nicht deckungsgleich mit entsprechenden Schnittlinien 3 des Schnittplans 4 der Rohplatte 52 gemäß Fig. 13 sind, gestrichelt dargestellt sind.

In Fig. 15 ist jedenfalls gut zu erkennen, dass die Schnittlinien 3 in Form der Erstschnittlinien 48 bei den Schnittplänen 4 dieser beiden Rohplatten 52 deckungsgleich sind, während die Schnittlinien 3 in Form einiger Zweitschnittlinien 49 und vor allem auch der Drittschnittlinien 50 nicht deckungsgleich sind.

Im Sinne einer möglichst effizienten Vorgehensweise mit möglichst wenig Sägevorgängen kann zum Aufteilen der beiden Rohplatten 52 gemäß Fig. 13 und 14 bei einem erfindungsgemäßen Verfahren nun wie folgt vorgegangen werden:
Die beiden Rohplatten 52 der Fig. 13 und 14 werden vor der Durchführung des ersten Sägeverfahrensabschnitts aufeinandergestapelt und aneinander ausgerichtet. Dann werden im ersten Sägeverfahrensabschnitt die aufeinandergestapelten Platten 1 als Plattenstapel 2 in die Plattenstreifen 53 und 54 aufgeteilt, indem die Sägevorgänge entlang der als Erstschnittlinien 48 gekennzeichneten Schnittlinien 3 am Plattenstapel 2 durchgeführt werden. Nach Beendigung dieses ersten Sägeverfahrensabschnittes werden die beiden in Fig. 13, 14 und 15 jeweils oben dargestellten Plattenstreifen 53 als Plattenstapel 2 zwischengelagert. An den in Fig. 13, 14 und 15 unteren Plattenstreifen 54 erfolgt dann ein Abstapeln der aufeinander liegenden Plattenstreifen 54. Anschließend werden diese abgestapelten Platten 1 in Form der Plattenstreifen 54 einzeln im zweiten und anschließend, soweit notwendig, auch im dritten Sägeverfahrensabschnitt durch Zersägen entlang der Schnittlinien 3 in Form der Zweitschnittlinien 49 und der Schnittlinien 3 in Form der Drittschnittlinien 50 in ihre Endformate 46 aufgeteilt. Dabei unterscheidet sich dann eben die Anzahl der aufeinandergestapelten Platten 1 zwischen dem ersten Sägeverfahrensabschnitt und dem zweiten Sägeverfahrensabschnitt. Anschließend können die beiden zwischengelagerten und nach wie vor aufeinandergestapelten Plattenstreifen 53 als Plattenstapel 2 im zweiten Sägeverfahrensabschnitt entlang der als Zweitschnittlinien 49 dargestellten Schnittlinien 3 zersägt werden, um so auch hier die Platten 1 in Form der Endformate 46 zu erzeugen.

Dies ist natürlich nur ein Beispiel. Auch hier könnte z.B. die Reihenfolge der weiteren Aufteilschritte der Platten 1 in Form der Plattenstreifen 53 und 54 mit den zweiten und soweit benötigt auch dritten Sägeverfahrensabschnitten gegenüber der geschilderten Vorgehensweise geändert werden.

Fig. 16 zeigt nun eine dritte Platte 1 bzw. Rohplatte 52, welche wiederum gemäß eines anderen Schnittplans 4 zersägt werden muss. In diesem Schnittplan 4 der Platte 1 der Fig. 16 liegen bereits die Schnittlinien 3, welche im ersten Sägeverfahrensabschnitt als Erstschnittlinien 48 gesägt werden müssen, anders als bei den Rohplatten 52 der Fig. 13 und 14. Dies bedeutet, dass der erste Sägeverfahrensabschnitt zur Aufteilung der Platte 1 gemäß Fig. 16 in die Plattenstreifen 52 an dieser Platte 1 bzw. Rohplatte 52 separat vorgenommen werden muss. Dies könnte z.B. so realisiert werden, dass die Durchführung des ersten Sägeverfahrensabschnittes an der Rohplatte 52 gemäß Fig. 16 durchgeführt wird, bevor man mit dem ersten Sägeverfahrensabschnitt der aufeinander gestapelten Rohplatten 52 gemäß Fig. 13 und 14 beginnt. Die an der Rohplatte 52 gemäß Fig. 16 im ersten Sägeverfahrensabschnitt erzeugten Plattenstreifen 53 und 54 könnten dann in der Plattenaufteilanlage zwischengelagert werden, bis die zweiten und dritten Sägeverfahrensabschnitte an den beiden unteren Plattenstreifen 54 der Fig. 13 und 14 abgeschlossen sind. Dann könnten die beiden unteren Plattenstreifen 54 der Platte 1 gemäß Fig. 16 mit den entsprechenden zweiten Sägeverfahrensabschnitten in die Endformate 46 aufgeteilt werden. Anschließend könnte dann der oberste Plattenstreifen 53 der Fig. 16 auf die beiden anderen, bereits aufeinander gestapelten Plattenstreifen 53 der Fig. 13 und 14 zusätzlich aufgestapelt werden, sodass dann an dem Plattenstapel 2, welcher aus den drei aufeinander gestapelten Plattenstreifen 53 besteht, der zweite Sägeverfahrensabschnitt zum Zersägen dieses Plattenstapels 2 entlang der entsprechenden Zweitschnittlinien 49 durchgeführt wird.

Die anhand der Fig. 13 bis 16 beispielhaft geschilderten Varianten des erfindungsgemäßen Verfahrens können sowohl auf der in Fig. 1 als auch auf der in Fig. 2 dargestellten Plattenaufteilanlage 7 aber auch auf anders ausgebauten Plattenaufteilanlagen 7 durchgeführt werden.

Bei den Plattenaufteilanlagen 7 gemäß der Fig. 1 und 2 werden dabei alle Sägevorgänge entlang aller Schnittlinien 3 an der jeweils einzigen Sägelinie 5 der jeweiligen Plattenaufteilanlage 7 durchgeführt. Hierzu werden die jeweils zu zersägenden Platten 1 bzw. Plattenstapel 2 im jeweiligen ersten Bereich 15 von der jeweiligen Vorschubeinrichtung 16 in der jeweiligen Vorschubrichtung 17 der jeweiligen Sägelinie 5 zugeführt. Das gegebenenfalls notwendige Plattenaufstapeln und/oder Plattenabstapeln wird dann mittels des jeweiligen Handhabungsgerätes 8 bzw. der jeweiligen Handhabungsgeräte 8 im zweiten Bereich 18 durchgeführt. Das gegebenenfalls notwendige Drehen der jeweiligen Platten 1 oder Plattenstapel 2 und die Rückführung der jeweils im nächsten Sägeverfahrensabschnitt zu zersägenden Platten 1 oder Plattenstapel 2 vom zweiten Bereich 18 in den ersten Bereich 15 wird ebenfalls durch die jeweiligen Handhabungsgeräte 8 realisiert, wobei diese Rückführung im zweiten Bereich 18 bei der Plattenaufteilanlage 7 gemäß Fig. 1 eben um die Sägelinie 5 herum und in der Plattenaufteilanlage 7 gemäß Fig. 2 über die Sägelinie 5 hinweg erfolgt. Das Ausrichten der Platten 1 und/oder Plattenstapel 2 kann zwischen den Sägeverfahrensabschnitten jeweils in der oben geschilderten Art und Weise durchgeführt werden.

### Legende

### Zu den Hinweisziffern

| | | | |
|---|---|---|---|
| 1 | Platte | 30 | Sägewagen |
| 2 | Plattenstapel | 31 | Druckbalkensteher |
| 3 | Schnittlinie | 32 | Laufrollen |
| 4 | Schnittplan | 33 | Antriebsrad |
| 5 | Sägelinie | 34 | erster Antrieb |
| 6 | Säge | 35 | zweiter Antrieb |
| 7 | Plattenaufteilanlage | 36 | Drehantrieb |
| 8 | Handhabungsgerät | 37 | Schieberantrieb |
| 9 | Saugglocke | 38 | Führungsrad |
| 10 | Grundkörper | 39 | Führungskulisse |
| 11 | Schieber | 40 | Klemmantrieb |
| 12 | Klemmer | 41 | Sauganschluss |
| 13 | Klemmbacken | 42 | Borsten |
| 14 | Klemmbackenpaar | 43 | Bewegungsrichtung |
| 15 | erster Bereich | 44 | Senk- und Hebetisch |
| 16 | Vorschubeinrichtung | 45 | Bewegungsrichtung |
| 17 | Vorschubrichtung | 46 | Endformat |
| 18 | zweiter Bereich | 47 | Abfallstreifen |
| 19 | Klemmer | 48 | Erstschnittlinien |
| 20 | Werkstückauflagetisch | 49 | Zweitschnittlinien |
| 21 | Druckbalken | 50 | Drittschnittlinien |
| 22 | Ausrichtnocken | 51 | Hauptsägeblatt |
| 23 | Ausrichtnocken | 52 | Rohplatte |
| 24 | Anschlagschiene | 53 | Plattenstreifen |
| 25 | Zusatztisch | 54 | Plattenstreifen |
| 26 | Vorritzersägeblatt | | |
| 27 | Laufschiene | | |
| 28 | Laufschiene | | |
| 29 | Vertikalachse | | |

## Patentansprüche

1. Verfahren zum Zersägen zumindest einer Platte (1) oder zumindest eines Plattenstapels (2) entlang von Schnittlinien (3) zumindest eines Schnittplans (4) mittels zumindest einer, entlang einer Sägelinie (5) verfahrbaren Säge (6) einer Plattenaufteilanlage (7), wobei die Schnittlinien (3) im, gegebenenfalls jeweiligen, Schnittplan (4) zum Teil zueinander parallel und zum Teil zueinander abgewinkelt, insbesondere orthogonal, angeordnet sind und das Zersägen der Platte (1) oder des Plattenstapels (2) in aufeinander folgenden Sägeverfahrensabschnitten durchgeführt wird, wobei in einem jeden der Sägeverfahrensabschnitte nur ein Sägevorgang entlang von einer einzelnen Schnittlinie (3) des, gegebenenfalls jeweiligen, Schnittplans (4) oder nur Sägevorgänge entlang von zueinander parallelen Schnittlinien (3) des, gegebenenfalls jeweiligen, Schnittplans (4) durchgeführt werden, **dadurch gekennzeichnet, dass** zwischen zumindest zwei der aufeinanderfolgenden Sägeverfahrensabschnitte ein Plattenaufstapeln und/oder ein Plattenabstapeln durchgeführt wird und die Sägevorgänge zumindest dieser zwei aufeinanderfolgenden Sägeverfahrensabschnitte mit einer voneinander verschiedenen Anzahl von aufeinandergestapelten Platten (1) durchgeführt werden.

2. Verfahren nach Anspruch 1, **dadurch gekennzeichnet, dass** alle Sägevorgänge aller Sägeverfahrensabschnitte des Verfahrens mit genau einer entlang einer Sägelinie (5) verfahrbaren Säge (6) der Plattenaufteilanlage (7) durchgeführt werden.

3. Verfahren nach Anspruch 1 oder 2, **dadurch gekennzeichnet, dass** das Plattenaufstapeln und/oder Plattenabstapeln, vorzugsweise ausschließlich, mittels zumindest eines, vorzugsweise programmgesteuerten, Handhabungsgerätes (8) der Plattenaufteilanlage (7) durchgeführt wird.

4. Verfahren nach Anspruch 3, **dadurch gekennzeichnet, dass** die zumindest eine Platte (1) oder der zumindest eine Plattenstapel (2) zwischen zumindest zwei der Sägeverfahrensabschnitte mittels des zumindest einen Handhabungsgerätes (8) transportiert und/oder gedreht wird.

5. Verfahren nach Anspruch 3 oder 4, **dadurch gekennzeichnet, dass** die Platten (1) in einem Plattenstapel (2) nach dem Plattenaufstapeln und/oder Plattenabstapeln und vor der Durchführung des nachfolgenden Sägeverfahrensabschnitts unter Verwendung des zumindest einen Handhabungsgerätes (8) aneinander ausgerichtet werden.

6. Verfahren nach einem der Ansprüche 3 bis 5, **dadurch gekennzeichnet, dass** das Handhabungsgerät (8) Saugglocken (9) zum Ansaugen einer einzelnen der Platten (1) aufweist.

7. Verfahren nach einem der Ansprüche 3 bis 6, **dadurch gekennzeichnet, dass** das Handhabungsgerät (8) einen Grundkörper (10) und einen am Grundkörper (10) schwenkbar und/oder verschiebbar gelagerten Schieber (11) zum Schieben oder Ziehen einer einzelnen Platte (1) oder eines Plattenstapels (2) aufweist.

8. Verfahren nach einem der Ansprüche 3 bis 7, **dadurch gekennzeichnet, dass** das Handhabungsgerät (8) einen bzw. den Grundkörper (10) und mehrere Klemmer (12) zum Festklemmen einer einzelnen Platte (1) oder eines Plattenstapels (2) zwischen zumindest zwei relativ zueinander bewegbaren Klemmbacken (13) des Klemmers (12) aufweist.

9. Verfahren nach Anspruch 8, **dadurch gekennzeichnet, dass** alle Klemmer (12) des Handhabungsgerätes (8) auf einer Seite des Grundkörpers (10) des Handhabungsgerätes (8) angeordnet sind.

10. Verfahren nach Anspruch 8 oder 9, **dadurch gekennzeichnet, dass** die Klemmer (12) jeweils zwei Klemmbackenpaare (14) von jeweils zwei relativ zueinander bewegbaren Klemmbacken (13) aufweisen, wobei die Klemmbackenpaare (14) voneinander wegweisend am Grundkörper (10) des Handhabungsgerätes (8) angeordnet sind.

11. Verfahren nach einem der Ansprüche 3 bis 10, **dadurch gekennzeichnet, dass** die zumindest eine Platte (1) oder der zumindest eine Plattenstapel (2) bei der Durchführung der Sägeverfahrensabschnitte jeweils in einem ersten Bereich (15) der Plattenaufteilanlage (7) von einer Vorschubeinrichtung (16) der Plattenaufteilanlage (7) in einer Vorschubrichtung (17) zur Sägelinie (5) hin transportiert und, in Vorschubrichtung (17) gesehen, hinter die Sägelinie (5) in einen zweiten Bereich (18) der Plattenaufteilanlage (7) weiter transportiert wird, wobei das Plattenaufstapeln und/oder Plattenabstapeln von dem zumindest einen Handhabungsgerät (8) im zweiten Bereich (18) durchgeführt wird.

12. Verfahren nach Anspruch 11, **dadurch gekennzeichnet, dass** der zweite Bereich (18) ein um die Sägelinie (5) außen herumführender Rückführbereich ist, in dem die zumindest eine Platte (1) oder der zumindest eine Plattenstapel (2) zwischen zwei der aufeinanderfolgenden Sägeverfahrensabschnitte von dem zumindest einen Handhabungsgerät (8) in den ersten Bereich (15) zurück transportiert wird.

13. Verfahren nach Anspruch 11 oder 12, **dadurch gekennzeichnet, dass** die zumindest eine Platte (1) oder der zumindest eine Plattenstapel (2) zwischen zwei der aufeinanderfolgenden Sägeverfahrensabschnitten von dem zumindest einen Handhabungsgerät (8) aus dem zweiten Bereich (18) über die Sägelinie (5) hinweg in den ersten Bereich (15) zurück transportiert wird.

14. Verfahren nach einem der Ansprüche 11 bis 13, **dadurch gekennzeichnet, dass** die zumindest eine Platte (1) oder der zumindest eine Plattenstapel (2) im zweiten Bereich zwischengelagert werden.

15. Verfahren nach einem der Ansprüche 1 bis 14, **dadurch gekennzeichnet, dass** bei dem Plattenaufstapeln zumindest eine vorab zwischengelagerte Platte (1) oder zumindest ein vorab zwischengelagerter Plattenstapel (2) mit aufgestapelt wird.
